# EUROPEAN PATENT APPLICATION

(11) **EP 4 318 343 A1**
(43) Date of publication of application: **07.02.2024**
(21) Application number: 22775308.4
(22) Date of filing: 16.03.2022
(51) Int. Cl.: G06Q 10/06

(54) **SUPPLY CHAIN RISK INFORMATION GENERATION DEVICE AND SUPPLY CHAIN RISK INFORMATION GENERATION SYSTEM**

(30) Priority: 25.03.2021 JP 2021051124
(71) Applicant: KABUSHIKI KAISHA TOSHIBA, Minato-ku Tokyo 105-8001 (JP); Toshiba Digital Solutions Corporation, Kawasaki-shi, Kanagawa 212-8585 (JP)
(72) Inventor: PON, Fei, Kawasaki-shi, Kanagawa 212-8585 (JP); ASANO, Yutaka, Kawasaki-shi, Kanagawa 212-8585 (JP); SETOGUCHI, Tatsuya, Kawasaki-shi, Kanagawa 212-8585 (JP); YAMADA, Toshiki, Kawasaki-shi, Kanagawa 212-8585 (JP)
(74) Representative: Hoffmann Eitle
(86) International application number: PCT/JP2022/011839
(87) International publication number: WO 2022/202519

(57) **Abstract**

A supply chain risk information generation device includes a server 2 that calculates a multiplicity for each of a plurality of suppliers included in a supply chain, and generates the multiplicity calculated as supply chain risk information.

## Description

### Technical Field

Embodiments of the present invention relate to a supply chain risk information generation device and a supply chain risk information generation system.

### Background Art

Supply chain management (SCM) systems are widely used. A supply chain is a term for a flow of procurement of parts, for example, that is considered as a single supply chain. In a supply chain, a relationship between a consumer (i.e., a buyer) and a seller (i.e., a supplier) is defined. An SCM system manages supply of products, such as parts, in a supply chain.

A supply chain includes a risk of supply that may be interrupted by an earthquake, a fire disaster, bad weather, or a man-made disaster, for example. Thus, various proposals have been made to evaluate stability of a supply chain against such risk.

However, when a disaster has occurred, a plurality of suppliers may be affected, and supply of a plurality of deliverables to a buyer may also be affected. Even if a buyer is able to grasp a condition of a supply chain for each deliverable using an SCM system when a disaster has occurred or when he/she is preparing for a disaster, it would not be easy to grasp a supply risk for a plurality of deliverables.

Patent Literature 1: Japanese Patent Application Laid-Open Publication No. 2015-115016

### Disclosure of Invention

In view of the foregoing, it is an object of the present embodiment to provide a supply chain risk information generation device and a supply chain risk information generation system each capable of easily grasping a supply risk in a supply chain.

### Means for Solving the Problem

A supply chain risk information generation device of an embodiment includes a multiplicity calculation unit configured to calculate a multiplicity for each of a plurality of suppliers included in a supply chain, and an information generation unit configured to generate the multiplicity calculated as supply chain risk information.

### Brief Description of the Drawings

Fig. 1 is a configuration diagram of a supply chain management system of an embodiment.
Fig. 2 is a schematic diagram for illustrating a supply chain according to the embodiment.
Fig. 3 is a block diagram illustrating configurations of programs and data executed in a server according to the embodiment.
Fig. 4 illustrates an example of supply chain information on a buyer according to the embodiment.
Fig. 5 is a block diagram of a supply chain risk information processing unit configured to generate supply chain risk information and output the generated information according to the embodiment.
Fig. 6 is a flowchart of a process of a risk data generation unit of the embodiment.
Fig. 7 illustrates a display example of supply chain risk information of the embodiment.
Fig. 8 is a diagram illustrating a display example of the supply chain risk information according to Modification 1 of the embodiment.
Fig. 9 is a diagram illustrating a display example of the supply chain risk information according to Modification 2 of the embodiment.
Fig. 10 is a diagram illustrating a display example of the supply chain risk information according to Modification 4 of the embodiment.
Fig. 11 is a diagram illustrating another display example of the supply chain risk information according to Modification 4 of the embodiment.
Fig. 12 is a view illustrating a display example of the supply chain risk information according to Modification 6 of the embodiment.
Fig. 13 is a view illustrating a display example of the supply chain risk information according to Modification 7 of the embodiment.
Fig. 14 is a diagram illustrating examples of coefficients for various variables for each type of insurance contract according to the embodiment.
Fig. 15 is a flowchart of a process of correcting a coefficient or an evaluation value for evaluating insurance according to the embodiment.

### Best Mode for Carrying Out the Invention

Hereinafter, an embodiment will be described with reference to the drawings.

### (System configuration)

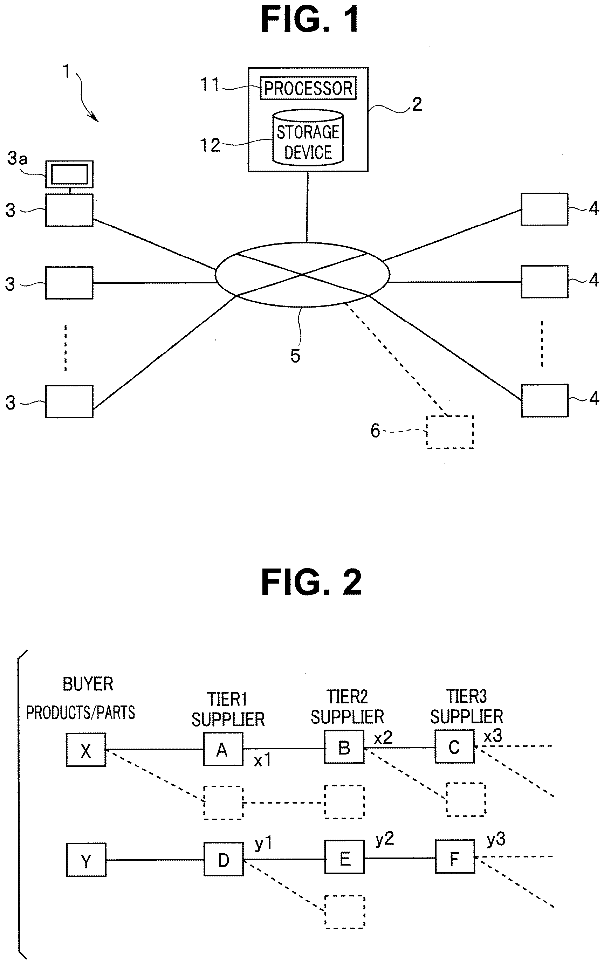

Fig. 1 is a configuration diagram of a supply chain management system according to the present embodiment. A supply chain management system 1 includes a server 2 as a supply chain risk management device, a plurality of terminals 3 for a plurality of buyers, a plurality of terminals 4 for a plurality of suppliers, and a communication network 5.

The server 2 and the plurality of terminals 3 and 4 are connected to each other in a communicable manner via the network 5. The network 5 herein is the Internet. Each of the terminals 3 and 4 includes an input device and a display device 3a. The input device is a keyboard or a mouse, for example, and the display device 3a is a monitor. Note that Fig. 1 illustrates the display device 3a of only one terminal 3.

The server 2 includes a processor 11 and a storage device 12. The storage device 12 stores various software programs for the supply chain management system described below, and also stores various types of information.

As the processor 11 reads a necessary program from the storage device 12 and executes the read program, various functions of the supply chain management system, and a function for grasping a supply risk described below are implemented.

The supply chain management system 1 is a system for managing a supply chain for each of products, such as parts, purchased by a plurality of buyers or supplied by a plurality of suppliers. As described below, the server 2 can transmit supply chain risk information to the terminals 3 and 4 via the network 5 in response to a request from the terminals 3 and 4 received via the network 5.

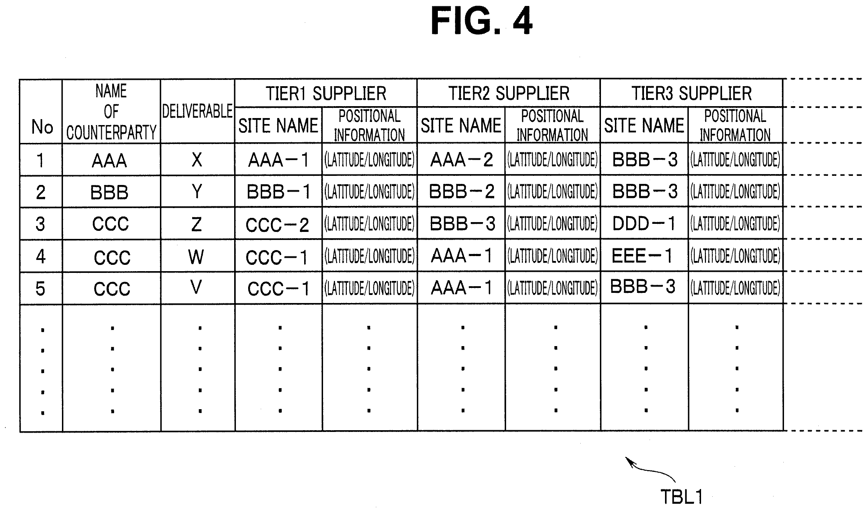

Each buyer is able to manage his/her supply chain using the supply chain management system 1. Therefore, each buyer is able to register his/her supply chain information (Fig. 4) by accessing the server 2 from his/her terminal 3. Each buyer may register all of his/her supply chain information, and each supplier may register his/her supply chain information, and further, a Tier 1 supplier may register supplier information on Tier 2 and following suppliers.

Each buyer is able to register information on each supplier (i.e., counterparty basic information (including counterparty risk information RI) by accessing the server 2 from his/her terminal 3.

Each buyer and each supplier are able to input, display, and output data on a screen using a browser by accessing the server 2 via the network 5 using his/her terminals 3 and 4. Note that the server 2 may be accessed from each of the terminals 3 and 4 through various authentication processes.

Fig. 2 is a schematic diagram for illustrating a supply chain. Fig. 2 illustrates an example of a supply chain for parts X and Y. Fig. 2 illustrates a case where a buyer has purchased the parts X from a supplier A, and has also purchased the parts Y from a supplier D to produce and sell the own products of the buyer. In such a case, the suppliers A and D are Tier 1 suppliers of the parts X and Y, respectively.

However, the suppliers A and D have respectively purchased parts x1 and y1 from suppliers B and E to produce and sell the parts X and Y. Further, the suppliers B and E have respectively purchased parts x2 and y2 from suppliers C and F to produce and sell the parts x1 and y1. Furthermore, the suppliers C and F have respectively purchased parts x3 and y3 from other suppliers to produce and sell the parts x2 and y2. In other words, the supply chain includes a plurality of tiers. Accordingly, each supplier may also be a buyer.

Note that the supply chain may branch into a plurality of suppliers as indicated by dotted lines in Fig. 2. For example, the buyer may receive supply of parts from two suppliers regarding the parts X, and the supplier D may also receive supply of parts from two suppliers.

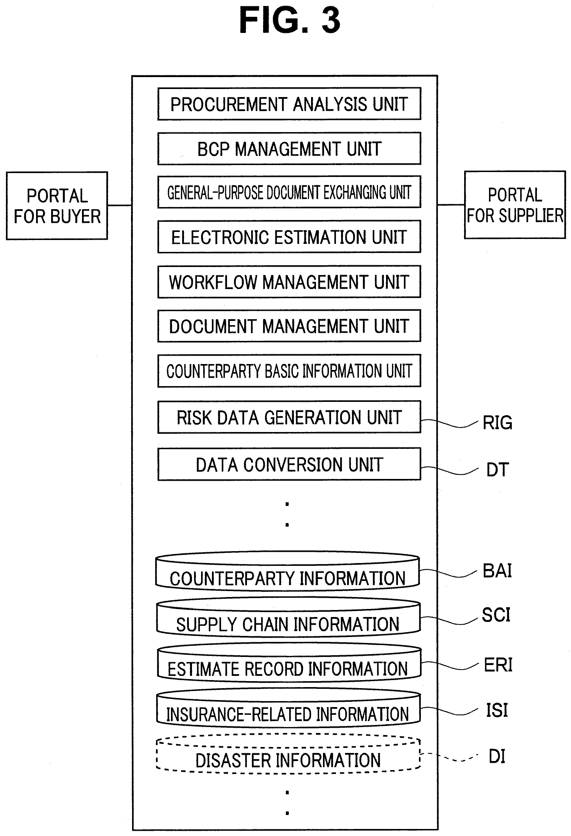

Fig. 3 is a block diagram illustrating configurations of programs and data executed in the server 2. The server 2 includes a software program for managing an operation between a buyer and a supplier based on SRM (supplier relationship management). In the supply chain management system 1, the software program for SRM is stored in the storage device 12.

Fig. 3 illustrates, for SRM of supply chain management, a procurement analysis unit, a BCP (business continuity planning) management unit, a general-purpose document exchanging unit, an electronic estimation unit, a workflow management unit, a document management unit, a counterparty basic information unit, a risk data generation unit, and a data conversion unit, but also includes various other processing units. Further, portal programs for managing access to the supply chain management system 1 are also included. In Fig. 3, a portal for a buyer is a processing unit for the buyer to access the server 2, and performs various authentication processes. When adequate authentication is successful, the buyer is allowed to use the server 2. A portal for a supplier is a processing unit for the supplier to access the server 2, and performs various authentication processes. When adequate authentication is successful, the supplier is allowed to use the server 2.

The procurement analysis unit, the BCP management unit, and the like are stored as software programs in the storage device 12, and can be read when necessary to be executed by the processor 11.

The procurement analysis unit analyzes procurement of products/parts from suppliers for each buyer. The procurement analysis unit can generate an analysis report, such as the number of estimates, results of estimates, and various evaluations, for each supplier related to each buyer based on estimate record information ERI, for example.

The BCP management unit collects latitude/longitude information on a site of each supplier forming a supply chain, and, in case of an emergency, such as a disaster, identifies a site existing in the disaster-affected range, for example.

The general-purpose document exchanging unit exchanges a document between a buyer and a supplier.

The electronic estimation unit manages a request for an estimate transmitted to a supplier and a reply from the supplier with regard to the estimate. A buyer is able to request one or more suppliers to estimate products/parts using the electronic estimation unit. The request for the estimate is transmitted to the one or more suppliers, and then, the one or more suppliers may transmit an estimate(s) to the buyer.

The workflow management unit manages workflows of various processes between a buyer and a supplier.

The document management unit manages a document created by a buyer, and a document received from a supplier, for example.

The counterparty basic information unit registers and manages basic information (e.g., a capital, a president, and counterparty risk information RI) on a Tier 1 supplier, for example, as counterparty information BAI in the storage device 12. When a buyer is unable to register information on all of suppliers, it is possible to allow a Tier 1 supplier to register basic information on Tier 2 and following suppliers.

The counterparty risk information RI included in the counterparty information includes a quantified risk level r regarding a countermeasure for a disaster taken by a supplier, for example. The risk level r is a value obtained by performing quantification based on a predetermined evaluation criterion. For example, the risk level r has four levels. The level 1 of the risk level r is the lowest, which means that a sufficient countermeasure for a disaster is taken, and there is a sufficient stock of products, for example. The level 4 of the risk level r is the highest, which means that a sufficient countermeasure for a disaster is not taken, for example. For example, a buyer conducts an interview with each supplier to determine the level based on the predetermined evaluation criterion. A risk level r of each of the Tier 2 and following suppliers is determined by the Tier 1 supplier, for example.

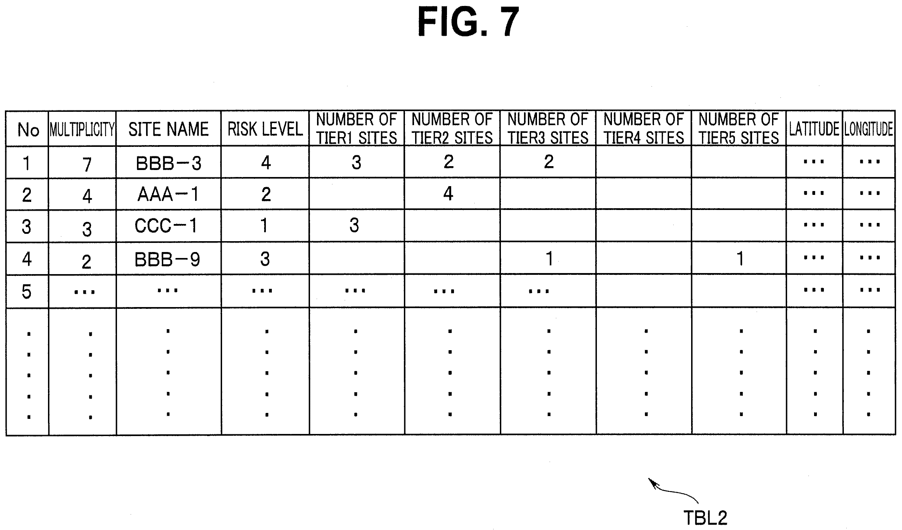

The risk data generation unit RIG generates supply chain risk information SCR (e.g., Fig. 7) described below. The supply chain risk information SCR is information for grasping a supply risk of a deliverable in a supply chain. Note that the risk data generation unit may be included in the BCP (business continuity planning) management unit.

The data conversion unit DT converts data related to insurance described below, for example.

The storage device 12 of the server 2 also stores various types of information other than the software programs. Fig. 3 illustrates only the counterparty information BAI, supply chain information SCI, the estimate record information ERI, and insurance-related information ISI.

The counterparty information BAI is basic information (e.g., a capital, a president, and counterparty risk information RI on the Tier 1 supplier, for example, as described above.

The supply chain information SCI is site information on the Tier 1, the Tier 2, and the Tier 3 suppliers, for example, for each deliverable (e.g., part or product) in a supply chain. The site information on the Tier 1, the Tier 2, and the Tier 3 suppliers, for example, is registered. Each site information includes a site name and positional information. Each site is a place where a factory, such as a subcontractor, is present. The positional information includes latitude/longitude information. The site information on the Tier 2 and the Tier 3 suppliers, for example, is registered by the Tier 1 supplier.

The estimate record information ERI is information, such as a request for an estimate and a result of the estimate. The insurance-related information ISI is information used to correct data related to insurance described below.

Fig. 4 illustrates an example of the supply chain information SCI on a buyer. The supply chain information SCI in Fig. 4 is tabular data (TBL1).

The supply chain information SCI is tabular data including the site information on the Tier 1, the Tier 2, and the Tier 3 suppliers, for example, for each deliverable. As described above, the site information includes a site name and positional information (i.e., latitude/longitude information). For example, Tier 1 to Tier 5 suppliers may be registered in the supply chain information SCI.

For example, in a first row of the table TBL1, "AAA" is registered as a "name of counterparty" that delivers a deliverable "X." In other words, "AAA" is a Tier 1 supplier of the deliverable "X." As Tier 1 supplier information on the deliverable "X," a site name "AAA-1" (e.g., a factory name of AAA) and "positional information" (i.e., latitude/longitude information) on the place of the "AAA-1" are registered in the table TBL1.

As Tier 2 supplier information for the site "AAA-1" of the Tier 1 supplier, a site name "AAA-2" (e.g., another factory of AAA) and "positional information" (i.e., latitude/longitude information) on the place of the site name "AAA-2" are registered in the table TBL1.

As Tier 3 supplier information for the Tier 2 supplier "AAA-2," a site name "BBB-3" (e.g., a factory of a company BBB different from the company AAA) and "positional information" (i.e., latitude/longitude information) on the place of the site name "BBB-3" are registered in the table TBL1.

In this manner, a plurality of supplier information forming a supply chain for a single deliverable "X" are registered as the supply chain information in the table TBL1.

If Tier 4 and Tier 5 suppliers are present, information on the suppliers is similarly registered in the table TBL1.

Supply chain information for other deliverables "Y," "Z," and the like are similarly registered in the table TBL1.

When the deliverables "X" to "V" illustrated in Fig. 4 are seen alone, the site "BBB-3" is related to the largest number of deliverables in the supply chain of the buyer. The site "AAA-1" and a site "CCC-1" are related to the second largest number of deliverables following the site "BBB-3."

Each buyer registers the foregoing supply chain information as his/her supply chain in the table TBL1. Accordingly, the storage device 12 stores the supply chain information on each buyer.

The buyer is able to register his/her supply chain information SCI from his/her terminal 3, and the supply chain information SCI registered by the buyer can be displayed on a screen of the display device 3a of his/her terminal 3.

The "positional information" (i.e., latitude/longitude information) included in the supply chain information SCI may also be used to, when a disaster has occurred, extract a site within a predetermined distance from a spot where the disaster has occurred.

Note that the table TLB 1 in Fig. 4 may be created for each buyer, or for each product sold by a buyer.

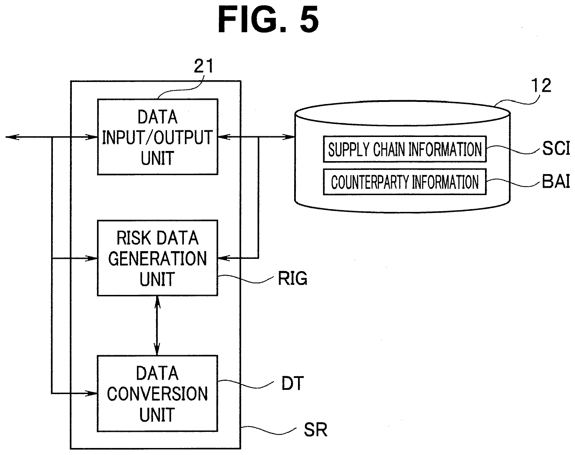

Fig. 5 is a block diagram of the supply chain risk information processing unit SR configured to generate the supply chain risk information SCR and output the generated information. The supply chain risk information processing unit SR is a software program.

The supply chain risk information processing unit SR includes a data input/output unit 21, the risk data generation unit RIG, and the data conversion unit DT.

The data input/output unit 21 receives a command from the terminal 3 of a buyer, and registers and reads data, such as the counterparty information BAI and the supply chain information SCI, in/from the storage device 12 in accordance with the command. Further, the data input/output unit 21 transmits the read data to the terminal 3 of the buyer that has transmitted the command.

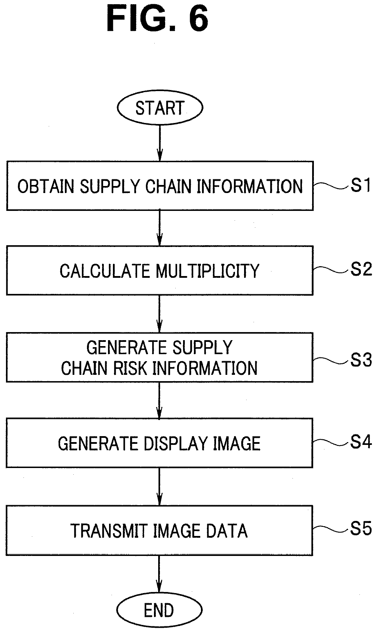

When the risk data generation unit RIG has received a risk information generation command from the buyer, the risk data generation unit RIG performs a predetermined operation using predetermined information, and generates image data on the supply chain risk information SCR, and then transmits the image to the terminal 3 of the buyer. Fig. 6 illustrates a process of the risk data generation unit RIG.

Fig. 6 is a flowchart of the process of the risk data generation unit RIG. When the processor 11 has received a risk information generation command from the terminal 3 of the buyer, the processor 11 executes the process in Fig. 6.

The processor 11 obtains the supply chain information SCI (Fig. 4; step (hereinafter abbreviated to S) 1). In other words, the processor 11 obtains the supply chain information SCI on the buyer who has requested for generation of risk information.

The processor 11 calculates a multiplicity m of each site from the supply chain information SCI (S2). The multiplicity m of each site is the number of appearances (i.e., a count value) of each "site name" included in the field of "site name" in the table TBL1. For example, in Fig. 4, the number of appearances (i.e., a count value) of the site "AAA-1" in the table TBL1 for the deliverables X, Y, Z, W, and V is "3," and the number of appearances (i.e., a count value) of the site "AAA-2" is "1." In step S2, the number of appearances (i.e., a count value) of each "site name" is calculated for all of the suppliers for all of the deliverables in the table TBL1.

In other words, the process in S2 forms a multiplicity calculation unit configured to calculate a multiplicity m for each of a plurality of suppliers included in a supply chain. The multiplicity m is calculated from the supply chain information SCI including the supplier information (i.e., a site name) on each supplier included in a plurality of tiers of a supply chain related to a plurality of deliverables X, Y, and Z, for example. Further, the multiplicity m is a count value of each supplier information (i.e., a site name) included in each tier of the supply chain information SCI.

Next, the processor 11 generates predetermined supply chain risk information SCR on each site (S3). Fig. 7 described below illustrates an example of the generated supply chain risk information SCR. The supply chain risk information SCR in Fig. 7 is tabular data. In other words, the process in S3 forms an information generation unit configured to generate the multiplicity m calculated in S2 as the supply chain risk information SCR. In Fig. 7 described below, the supply chain risk information SCR includes a counterparty risk level r of each supplier in addition to the multiplicity m.

The supply chain risk information SCR includes a multiplicity m, a site name, a risk level r, the number of Tier 1 sites, the number of Tier 2 sites, the number of Tier 3 sites, the number of Tier 4 sites, the number of Tier 5 sites, and latitude and longitude information for each site. For example, the number of Tier 1 sites is the number of registrations of the relevant site as the Tier 1 site in the supply chain information SCI. The number of Tier 2 sites is the number of registrations of the relevant site as the Tier 2 site in the supply chain information SCI. The processor 11 calculates the number of sites, such as the number of Tier 1 sites, by counting the number of appearances of each site in each tier (such as a Tier 1 or Tier 2) of the supplier in the table TBL1.

The processor 11 generates a display image (S4). Specifically, the supply chain risk information SCR is sorted in a descending order of multiplicity m calculated as above, and then, the processor 11 generates a table TBL2 illustrated in Fig. 7 as image data to be displayed on the display device 3a.

The processor 11 transmits the generated image data to the terminal 3 of the buyer who has requested for generation of risk information (S5). In other words, the process in S5 forms an information output unit configured to output the supply chain risk information SCR.

Fig. 7 illustrates a display example of the supply chain risk information SCR. The supply chain risk information SCR in Fig. 7 is displayed on the display device 3a of the terminal 3 of the buyer.

Fig. 7 illustrates site names in a list form in a descending order of multiplicity m (i.e., a count number) of a site registered as a supplier in the table TBL1 of Fig. 4. The risk level r in Fig. 7 is included in the counterparty risk information RI. The risk level r is a quantified value regarding a countermeasure for a disaster taken by a supplier, for example, as described above.

In Fig. 7, the multiplicity m of the site name "BBB-3" is "7." This means that the site name "BBB-3" is registered as a supplier seven times in the table TBL1 of Fig. 4. The multiplicity m of the site name "AAA-1" is "4." This means that the site name "AAA-1" is registered as a supplier four times in the table of Fig. 4. The multiplicity m of the site name "BBB-3" is the highest of all the multiplicities m of the other sites.

Since the table TBL2 in Fig. 7 is displayed on the display device 3a of the terminal 3 of the buyer, the buyer is also able to know that the risk level of the site name "BBB-3" is high.

A site with a high multiplicity m means that when the site suffers a disaster, for example, and supply of parts from the site is thus stopped, the buyer will be greatly affected. Further, if the risk level of the site is also high, there is a problem that when a disaster occurs, a long time would be required for recovery.

As described above, in the process of S3, tabular data including the multiplicity m and the risk level r of each supplier is generated as the supply chain risk information SCR. The generated supply chain risk information SCR is displayed on the display device 3a of the terminal 3.

Accordingly, the buyer is able to easily grasp the necessity of a countermeasure for a risk in the supply chain (e.g., giving advice to the supplier and increasing the number of suppliers) by referring to the supply chain risk information SCR in Fig. 7.

Next, modifications of the generated supply chain risk information SCR will be described.

### (Modification 1)

In the supply chain risk information SCR illustrated in Fig. 7, the multiplicity m and the risk level r are represented in a tabular form, but it is also possible to, as Modification 1 of the supply chain risk information SCR, represent the multiplicity m and the risk level r on a two-dimensional map in the form of a scatter diagram.

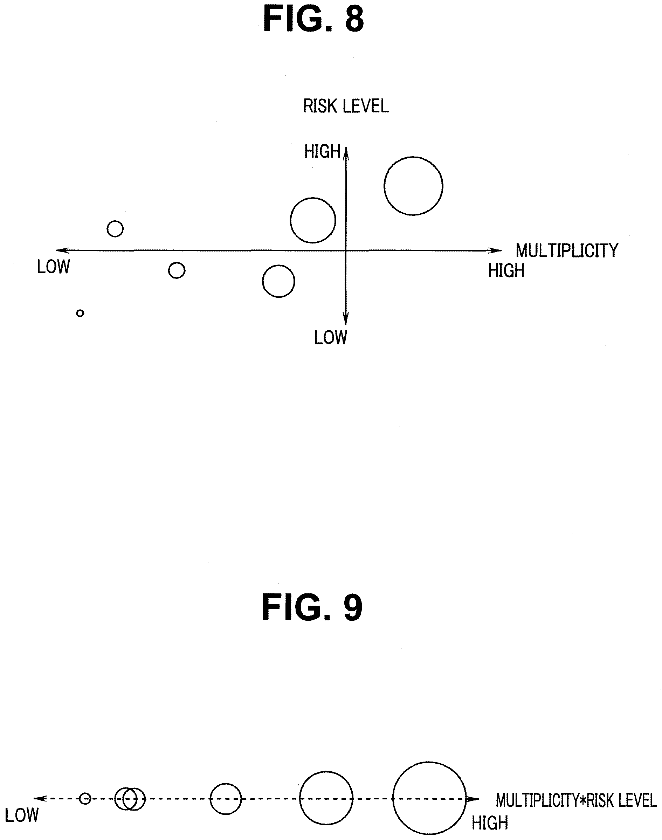

Fig. 8 is a diagram illustrating a display example of the supply chain risk information SCR according to Modification 1. Fig. 8 illustrates the supply chain risk information SCR in the form of a two-dimensional scatter diagram so that the necessity of a countermeasure for a risk can be intuitively grasped. An X-axis (horizontal axis) of Fig. 8 represents the multiplicity m, and a Y-axis (vertical axis) represents the risk level r.

A site having a high multiplicity m and a high risk level r is located at an upper right corner on an XY plane. A site having a low multiplicity m and a low risk level r is located at a lower left corner on the XY plane. A size of each circle herein corresponds to the value of (multiplicity * risk level). A circle of a site having a high multiplicity m and a high risk level r is large. A circle of a site having a low multiplicity m and a low risk level r is small. A circle of a site having a high multiplicity m and a low risk level r is not large. Likewise, a circle of a site having a low multiplicity m and a high risk level r is not small.

As described above, in the process of S3, two-dimensional scatter diagram data having a first axis representing the multiplicity m and a second axis representing the risk level r may be generated as the supply chain risk information SCR.

In other words, the necessity of a countermeasure for a risk of each site is represented by a position of a circle on the XY plane and the size of the circle. Accordingly, a buyer is able to intuitively grasp the necessity of a countermeasure for a risk of each site by referring to the scatter diagram of Fig. 8.

### (Modification 2)

Although Fig. 8 illustrates the necessity of a countermeasure for a risk using a two-dimensional map of the multiplicity m and the risk level r, it is also possible to, as Modification 2 of the supply chain risk information SCR, illustrate the necessity of a countermeasure for a risk using a one-dimensional map.

Fig. 9 is a diagram illustrating a display example of the supply chain risk information SCR according to Modification 2. Fig. 9 also displays the supply chain risk information SCR in the form of a one-dimensional scatter diagram so that the necessity of a countermeasure for a risk can be intuitively grasped. A horizontal axis corresponds to the value of (multiplicity * risk level).

As described above, in the process of S3, one-dimensional scatter diagram data for which both the multiplicity m and the risk level r are taken into consideration may be generated as the supply chain risk information SCR.

Accordingly, a buyer is able to intuitively grasp the necessity of a countermeasure for a risk of each site by referring to the scatter diagram of Fig. 9.

### (Modification 3)

Furthermore, although the supply chain risk information SCR in Fig. 7 is displayed as the table TBL2 in which the multiplicity m represents the number of appearances of each site name in the table TBL1, it is also possible to, as Modification 3 of the supply chain risk information SCR, display in the table TBL2 not a mere count value but a value obtained by multiplying the count value by a weighting factor α as the multiplicity m. In other words, the multiplicity m may be a value calculated based on the count value of each supplier information (i.e., site name) included in each tier of the supply chain information SCI.

For example, the weighting factor α is set higher for the Tier 1 supplier, and is set lower for a higher-order supplier, such as the Tier 2 and Tier 3 suppliers. The multiplicity m is obtained by multiplying the thus set weighting factor α by the count value. The display data of the table TBL2 is created in a descending order of multiplicity m obtained in this manner.

Accordingly, the display data, such as the one in Fig. 7, 8, or 9, may be displayed on the display device 3a using the multiplicity m generated by taking into consideration the weighting factor α as well.

### (Modification 4)

Further, although the supply chain risk information SCR in Fig. 7 includes the multiplicity m and the risk level r represented in a tabular form, and the supply chain risk information SCR in each of Figs. 8 and 9 includes the multiplicity m and the risk level r represented in the form of a scatter diagram, it is also possible to display the multiplicity m using a graph representing connections among the sites as Modification 4.

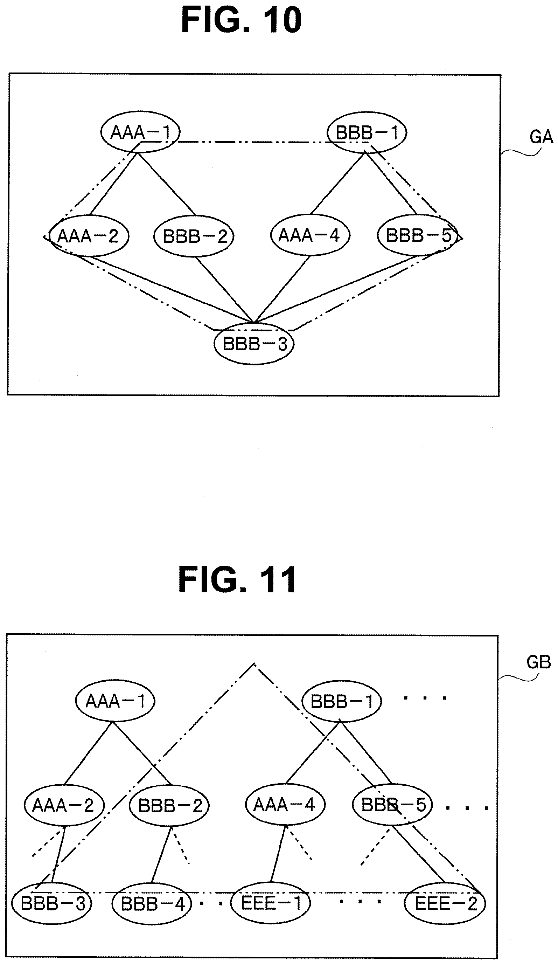

For example, when a buyer sends to the server a display command for displaying a multiplicity display graph after referring to the supply chain risk information SCR in Fig. 7, the server 2 generates a display image in Fig. 10 or 11 from the supply chain risk information SCR in Fig. 7, and transmits the display image to the terminal 3 of the buyer so that the generated display image is displayed on the display device 3a.

Fig. 10 is a diagram illustrating a display example of the supply chain risk information SCR according to Modification 4. Fig. 10 illustrates an example of a multiplicity display graph of a diamond-shaped supply chain. Fig. 10 illustrates an example of a screen GA of the multiplicity display graph of the diamond-shaped supply chain displayed on the display device 3a of the terminal 3 of the buyer.

The display in Fig. 10 is generated based on connection information, which defines connections among the sites, extracted from the data of the table TBL1. The display in Fig. 10 is obtained by creating a graph of information on the connections among the sites such that each site is represented by a node, and adjacent nodes are connected by a link, and illustrates a structure of a part of a supply chain of a buyer.

Fig. 10 illustrates that one site "BBB-3" as a Tier 3 supplier supplies parts to four Tier 2 suppliers. The Tier 1 supplier receives supply of parts from the plurality of Tier 2 suppliers to disperse a risk. However, the Tier 2 suppliers use only one Tier 3 supplier. In other words, since a structure of the supplier following the Tier 2 suppliers has a so-called "diamond-shape" as indicated by dashed and double-dotted lines in Fig. 10, the buyer is able to easily recognize that his/her supply chain includes a portion dependent on one supplier. It is easily understood that if the Tier 3 supplier suffers a disaster, for example, the buyer will be greatly affected.

As described above, in the process of S3, graph data, which represents connections among suppliers in a supply chain, may be generated as the supply chain risk information SCR.

Fig. 11 is a diagram illustrating another display example of the supply chain risk information SCR according to Modification 4. Fig. 11 is a diagram illustrating an example of a multiplicity display graph of a pyramid-shaped supply chain. Fig. 11 illustrates an example of a screen GB of the multiplicity display graph of the pyramid-shaped supply chain displayed on the display device 3a of the terminal 3 of the buyer. The display in Fig. 11 is also generated based on information on the connections among the sites extracted from the data of the table TBL1 as in Fig. 10.

Fig. 11 illustrates that a plurality of sites as Tier 3 suppliers supply their respective products to four Tier 2 suppliers. Since a structure of suppliers following the Tier 2 suppliers has a "pyramid-shape" as indicated by dashed and double-dotted lines in Fig. 11, the buyer is able to easily recognize that his/her supply chain does not include a portion dependent on one supplier.

Note that a risk level may also be displayed in the multiplicity display graphs of Figs. 10 and 11. It is also possible to display a numerical value of the risk level around each site name displayed in Figs. 10 and 11, or change a color of a node of each site displayed in Figs. 10 and 11 in accordance with the risk level. For example, a node with the highest risk level may be represented in red color, and a node with the next highest risk level may be represented in orange color.

### (Modification 5)

Further, it is possible to, in response to designation of regional information, display a site related to the designated region in a manner distinguishable from sites of other regions. For example, when regional information "Hokkaido" or latitude/longitude information on "Hokkaido" is designated, a node of a site name of the site "Hokkaido" displayed in Fig. 10 or 11 is displayed in "red color" so as to be distinguishable from other sites, for example.

Accordingly, a multiplicity in a supply chain can be displayed in association with a region where a disaster has occurred. For example, when a disaster has occurred, it is possible to display the graph of Fig. 10 (or Fig. 11) while designating regional information on the area where the disaster has occurred. Meanwhile, even when a disaster has not occurred, it is possible to, by designating regional information and displaying the regional information in a manner distinguishable from other regions, allow a supply risk condition of the designated region to be grasped.

### (Modification 6)

Further, the supply chain risk information SCR may be displayed on a map.

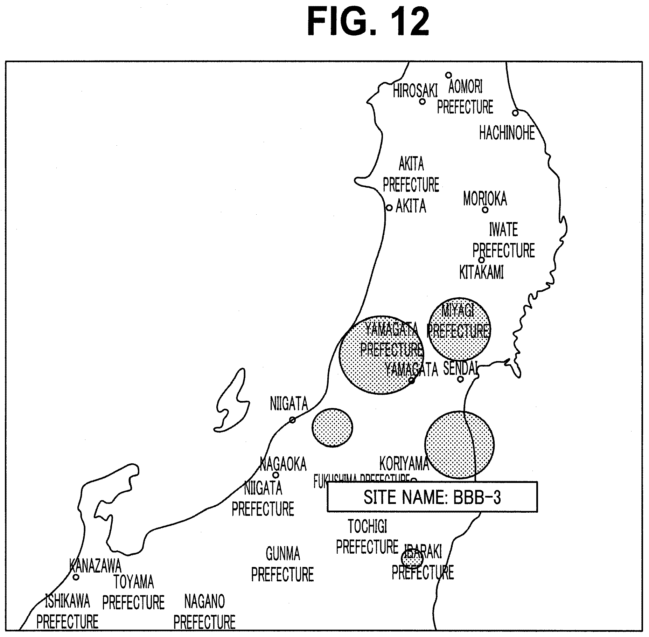

Fig. 12 is a view illustrating a display example of the supply chain risk information SCR according to Modification 6. Fig. 12 displays a mark (herein, a circular mark) with a size corresponding to the value of (multiplicity * risk level) in Fig. 8 at a position of a site on a map.

The supply chain information SCI includes positional information (i.e., latitude/longitude information) on each site. Accordingly, as illustrated in Fig. 12, the necessity of a countermeasure for a risk is displayed using a circle with a size corresponding to the value of (multiplicity * risk level) at a position of each site on the map using the positional information on the site. When a buyer has selected a desired circle using an input device, such as a mouse, on the terminal 3, a site name related to the circle is displayed in a pop-up window. In Fig. 12, "Site Name: BBB-3" is displayed in a pop-up window.

Note that the size of each circular mark may be a size corresponding only to the value of the multiplicity m or a size corresponding only to the value of the risk level r.

In other words, in step S3, it is also possible to generate, as the supply chain risk information SCR, map data that represents a mark related to the multiplicity m, the risk level r, or both the multiplicity m and the risk level r of each supplier on a map based on positional information on each site.

A user is able to easily grasp a location of each site on the map in accordance with the necessity of a countermeasure for a risk of the site by referring to Fig. 12.

### (Modification 7)

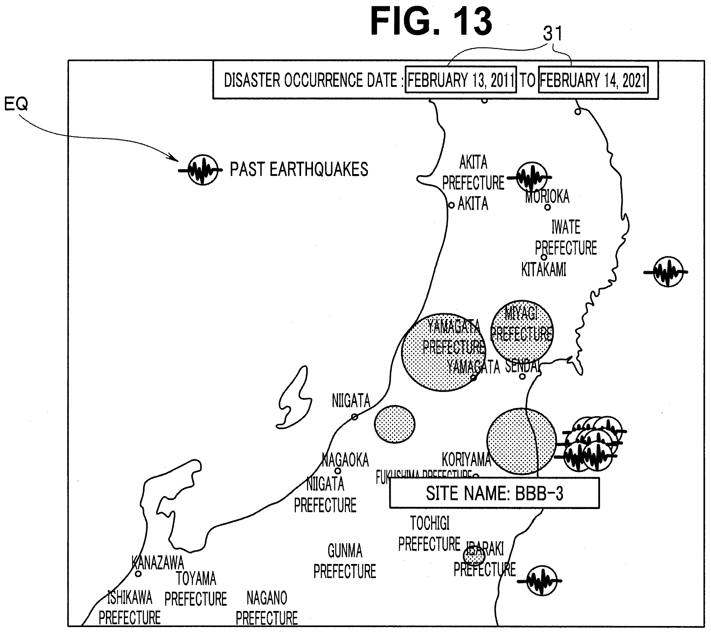

Further, as Modification 7, it is also possible to display disaster information in the past on the display of Fig. 12. Fig. 13 is a view illustrating a display example of the supply chain risk information SCR according to Modification 7. Fig. 13 illustrates an example of a multiplicity display in which a circle with a size corresponding to (multiplicity * risk level) in Fig. 8 is displayed at a position of each site on a map, and also, disaster information in the past is displayed. Fig. 13 illustrates an example in which an earthquake is designated as a disaster. Disaster information in the past (including positional information and date information) may be stored as disaster information DI in the storage device 12 as indicated by a dotted line, or may be obtained from an external information source.

In Fig. 13, past earthquake occurrence information is displayed on the map in addition to the display of Fig. 12. In Fig. 13, marks EQ each representing occurrence of an earthquake are displayed on the map. Accordingly, a user is able to designate information on a period in which disasters have occurred (i.e., earthquakes have occurred) in a period information input field 31.

In other words, in step S3, it is also possible to generate, as the supply chain risk information SCR, map data including locations where disasters have occurred in the past based on the past disaster occurrence information, and output the map data.

As described above, when a buyer instructs the server 2 with a risk display command upon occurrence of a disaster, the supply chain risk information SCR is generated, and a screen, such as the one in Fig. 7, is displayed on the display device 3a, to thereby enable the buyer to easily grasp a supply risk. Furthermore, the present modification enables, even if a disaster has not occurred, the buyer to easily grasp a supply risk of parts, etc., in a supply chain.

Referring back to Fig. 5, the data conversion unit DT will be described. The data conversion unit DT performs a process for cooperating with a device or a system that is configured to perform various evaluations using supply risk information on a supply chain.

For example, when an insurance contract or a loan contract is concluded, for example, a supply risk in a supply chain of a customer who is a contractor may be considered.

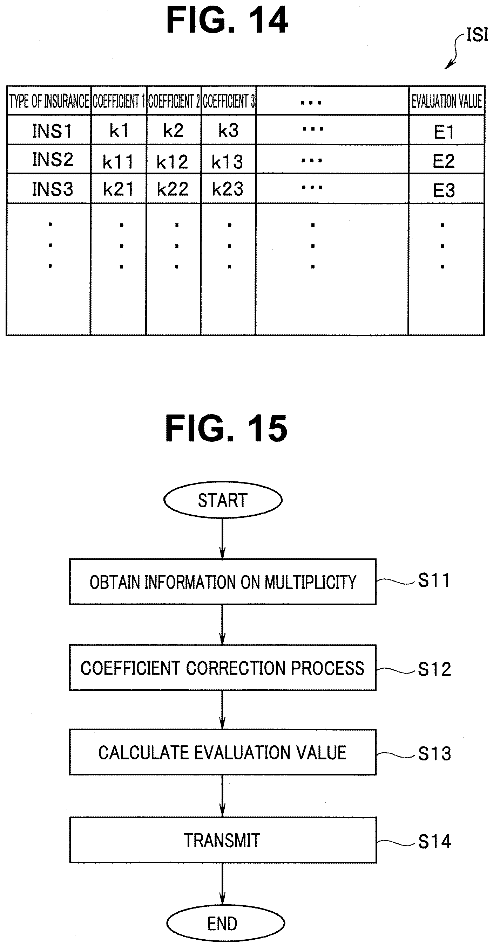

Fig. 14 is a diagram illustrating examples of coefficients for various variables for each type of insurance contract according to an embodiment. Examples of an insurance contract include insurance for suspension of business and liability insurance. Various indices are used for scenes, such as underwriting of an insurance contract and assessment of insurance payout. For each index, a predetermined coefficient k1 is set, for example, for each type of insurance. Various coefficients provided for indices, such as a capital and the sales amount, are set in advance. A predetermined evaluation of a customer is calculated as an evaluation value using the coefficient k1.

When the foregoing multiplicity m in the supply chain of the customer is high, it is predicted that the customer (i.e., a buyer or a supplier) may suffer a big loss if a disaster (such as an earthquake or a heavy rain) occurs. Thus, the data conversion unit DT corrects a value of a coefficient provided for a predetermined index in an insurance contract based on the multiplicity m, and outputs the corrected value.

The server 2 can, when an insurance company underwrites an insurance contract to conclude some insurance contract with a buyer or a supplier, or assesses insurance payout, correct the value of the foregoing coefficient by referring to the multiplicity m stored in the server 2 that is the supply chain risk management device. Information on the insurance contract is registered as the insurance-related information ISI in the storage device 12.

In other words, a person in charge of the insurance company is able to conduct an evaluation for an insurance contract by taking into consideration a supply risk in a supply chain using the foregoing supply chain management system 1.

The user (i.e., the person in charge of the insurance company) is able to access the supply chain management device (i.e., the server) from his/her terminal 6 (indicated by a dotted line in Fig. 1).

The user (i.e., the person in charge of the insurance company) registers in advance an evaluation formula for evaluation and an operational expression (i.e., a correction formula) for a variable (i.e., an index) used in the evaluation formula as the insurance-related information ISI in the storage device 12 for each insurance type. Further, the variable (i.e., the index) to be corrected with the multiplicity m in the operational expression (i.e., the correction formula) is also designated in advance by the user.

When the server 2 has received from the user a command to execute an evaluation using the multiplicity m, the server 2 executes an insurance contract evaluation process using the data conversion unit DT. Through the insurance contract evaluation process, at least one coefficient provided for a predetermined index is corrected based on the multiplicity m in the supply chain.

Specifically, when the user (i.e., the person in charge of the insurance company) designates insurance type information with a contractor (i.e., a buyer or a supplier) and inputs the designated information, a process in Fig. 15 is executed. Fig. 15 is a flowchart of a process of correcting a coefficient or an evaluation value for evaluating insurance.

The server 2 obtains the multiplicity m of the contractor from the inputted information (S11).

The server 2 identifies an operational expression from the inputted information, and corrects at least one coefficient provided for an index used in the operational expression, using the multiplicity m (S12).

The server 2 calculates an evaluation value using the evaluation formula based on the at least one corrected coefficient and other predetermined coefficients (S13).

The server 2 transmits the calculated evaluation value to the terminal 6 of the insurance company (S14). Note that although at least one coefficient is corrected using the multiplicity m in the foregoing example, correction may be performed using the risk level r instead of the multiplicity m, or by taking into consideration both the multiplicity m and the risk level r.

Accordingly, the server 2 can perform an insurance operation evaluation process using the supply chain risk information.

Although the foregoing data conversion process is used to evaluate an insurance-related operation, the process may also be used to evaluate a finance-related operation. For example, the process is similarly applicable to correction of a coefficient of an evaluation index for a loan.

Thus, the data conversion unit DT forms a correction unit configured to correct a coefficient or an evaluation value for evaluating insurance or evaluating finance based on the multiplicity m, the risk level r of each supplier, or both the multiplicity m and the risk level r.

As described above, according to the foregoing embodiments, it is possible to provide a supply chain risk information generation device and a supply chain risk information generation system each capable of easily grasping a supply risk condition in a supply chain.

Note that each program that executes the foregoing operation is entirely or partially recorded or stored in a storage medium, such as a portable medium like a USB memory or a CD-ROM, or a hard disk, as a computer program product. When the program is read by a computer, the entirety of or a part of the operation is executed. Alternatively, the program may be entirely or partially distributed or provided via a communication network. The user is able to easily implement the supply chain risk information generation device or the supply chain risk information generation system of the present invention by downloading the program via the communication network and installing the downloaded program on a computer, or installing the program on a computer from a recording medium.

Although some embodiments of the present invention have been described above, such embodiments are only examples, and are not intended to limit the scope of the invention. Such novel embodiments may be implemented in various other forms, and thus, various omissions, replacements, and changes are possible without departing from the gist of the invention. Such embodiments and modifications to the embodiments are included in the scope and the gist of the invention, and are also included in the scope of the claimed invention and equivalents of the claimed invention.

The present application is based upon and claims the benefit of priority to Japanese Patent Application No. 2021-051124, filed March 25, 2021, the entire contents of which are incorporated in the specification and claims of the present application by reference.

## Claims

1. A supply chain risk information generation device, comprising:
a multiplicity calculation unit configured to calculate a multiplicity for each of a plurality of suppliers included in a supply chain; and
an information generation unit configured to generate the multiplicity calculated as supply chain risk information.

2. The supply chain risk information generation device according to claim 1, wherein the multiplicity is calculated from supply chain information including supplier information on each of the suppliers included in a plurality of tiers of the supply chain related to a deliverable.

3. The supply chain risk information generation device according to claim 2, wherein the multiplicity is a count value of each piece of the supplier information included in each of the tiers of the supply chain information, or a value calculated based on the count value.

4. The supply chain risk information generation device according to claim 1, wherein the information generation unit generates the supply chain risk information including the multiplicity and a counterparty risk level of each of the suppliers.

5. The supply chain risk information generation device according to claim 1, further comprising an information output unit configured to output the supply chain risk information.

6. The supply chain risk information generation device according to claim 5, wherein the information generation unit generates, as the supply chain risk information, tabular data including the multiplicity and the counterparty risk level of each of the suppliers.

7. The supply chain risk information generation device according to claim 5, wherein the information generation unit generates, as the supply chain risk information, two-dimensional scatter diagram data having a first axis representing the multiplicity and a second axis representing the counterparty risk level.

8. The supply chain risk information generation device according to claim 5, wherein the information generation unit generates, as the supply chain risk information, one-dimensional scatter diagram data for which both the multiplicity and the counterparty risk level are taken into consideration.

9. The supply chain risk information generation device according to claim 5, wherein the information generation unit generates, as the supply chain risk information, graph data representing connections among the suppliers in the supply chain.

10. The supply chain risk information generation device according to claim 5, wherein
the supply chain information includes positional information on each of the suppliers, and
the information generation unit generates, as the supply chain risk information, map data representing a mark related to the multiplicity, the risk level, or both the multiplicity and the risk level of each of the suppliers on a map based on the positional information.

11. The supply chain risk information generation device according to claim 10, wherein the information generation unit generates the map data including a past disaster occurrence place based on past disaster occurrence information, and outputs the map data.

12. The supply chain risk information generation device according to claim 1, comprising a correction unit configured to correct a coefficient or an evaluation value for evaluating insurance or evaluating finance based on the multiplicity, a counterparty risk level of each of the suppliers, or both the multiplicity and the counterparty risk level.

13. A supply chain risk information generation system, comprising:
a terminal; and
a supply chain risk information generation device connected to the terminal via a network, wherein
the supply chain risk information generation device includes
a multiplicity calculation unit configured to calculate a multiplicity for each of a plurality of suppliers included in a supply chain, and
an information generation unit configured to generate the multiplicity calculated as supply chain risk information, and
the supply chain risk information generation device transmits the supply chain risk information to the terminal via the network in response to a request from the terminal received via the network.
